# EUROPÄISCHE PATENTSCHRIFT

(11) **EP 1 940 595 B1**
(45) Veröffentlichungstag und Bekanntmachung des Hinweises auf die Patenterteilung: **23.12.2009**
(21) Anmeldenummer: 06805808.0
(22) Anmeldetag: 22.09.2006
(51) Int. Cl.: B25J 15/06, B65G 47/91, B66C 1/02, B25B 11/00

(54) **SAUGGREIFER MIT ELASTISCHEM, EIN DEN SAUGZUSTAND ANZEIGENDES MITTEL AUFWEISENDEM SAUGKÖRPER**
SUCTION GRIPPER WITH ELASTIC SUCTION BODY HAVING MEANS THAT INDICATE THE SUCKING STATE
PINCE ASPIRANTE DOTEE D'UN CORPS ASPIRANT ELASTIQUE PRESENTANT UN MOYEN INDIQUANT L'ETAT D'ASPIRATION

(30) Priorität: 22.09.2005 DE 102005045869; 28.09.2005 DE 102005047372; 18.10.2005 DE 102005051201
(43) Veröffentlichungstag der Anmeldung: 09.07.2008
(73) Patentinhaber: J. Schmalz GmbH, 72293 Glatten (DE)
(72) Erfinder: EISELE, Thomas, 78737 Fluorn-Winzeln (DE); SCHAAF, Walter, 72250 Freudenstadt-Grüntal (DE)
(74) Vertreter: Steimle, Josef
(86) Internationale Anmeldenummer: PCT/EP2006/009215
(87) Internationale Veröffentlichungsnummer: WO 2007/033830

(56) Entgegenhaltungen:
- DE-A1- 1 806 451
- DE-A1- 3 036 272
- DE-A1- 19 609 975
- DE-A1- 19 847 314

## Beschreibung

Die Erfindung betrifft einen Sauggreifer zum Ansaugen von Werkstücken mit den Merkmalen des Oberbegriffs des Anspruchs 1.

Sauggreifer werden verwendet, um Gegenstände oder Werkstücke anzusaugen, sodass sie entweder auf diese Weise fixiert und/oder gehandhabt werden können. Befinden sich die Sauggreifer an Manipulatoren, so kann der angesaugte Gegenstand transportiert werden. Wichtig hierfür ist, dass der Gegenstand korrekt angesaugt wird und im Saugraum ein ausreichend hoher Unterdruck herrscht, sodass der Gegenstand mit Sicherheit festgehalten wird. Zur Ermittlung des Unterdrucks werden Unterdrucksensoren verwendet, die in der Unterdruckleitung zum Sauggreifer vorgesehen sind und die den ermittelten Wert an eine Maschinensteuerung weitergeben, sodass diese bei Erreichen des gewünschten Unterdrucks die Unterdruckquelle abschaltet oder die Unterdruckleitung absperrt. Für einfache Handhabungseinrichtungen sind derartige Unterdrucksensoren jedoch zu aufwändig und teuer und oftmals sind keine Steuereinrichtungen vorhanden, die die Sensordaten auswerten.

Aus der DE 198 17 426 B4 ist ein mehrere Greifer aufweisendes Greifersystem bekannt, wobei an jedem Greifer die Funktions-und Zustandskontrolle erkennbar ist. Hierfür bedarf es aber elektronischer Bauteile, z.B. LED, die unter einer durchsichtigen Haube angeordnet sind, so dass sie von außen sichtbar sind. Die DE 39 23 672 C2 beschreibt einen Sauggreifer mit einem Sensorteller und einem Saugteller, über die bei nicht exakt auf das Werkstück aufgesetztem Sauggreifer ein unnötiger Luftverbrauch verhindert werden soll. Weitere Unterdruckhandhabungseinrichtungen sind aus der DE-T-600 00 352 und der DE-A-101 40 248 A1 bekannt.

Auf jeden Fall sind für die Zustandskontrolle zusätzliche Bauteile am Sauggreifer erforderlich.

Aus der DE-A-19847314 ist ein Sauggreifer gemäβ dem Oberbegriff des Anspruchs 1 bekannt, bei dem das den Saugzustand anzeigende Mittel ein drucksensitives leitfähiges Gummi ist. Der Erfindung liegt daher die Aufgabe zugrunde, einen Sauggreifer der eingangs genannten Art derart auszugestalten, dass er einerseits preiswert ist, dass andererseits aber auch sofort erkennbar ist, ob am Sauggreifer ein Unterdruck anliegt oder nicht.

Diese Aufgabe wird mit einem Sauggreifer gelöst, der die Merkmale des Anspruchs 1 aufweist.

Beim erfindungsgemäßen Sauggreifer wird das Mittel zusammen mit dem Sauggreifer ausgeliefert und stellt kein zusätzliches Bauteil dar, welches, zum Beispiel wie ein Drucksensor oder dergleichen, mit dem Sauggreifer verbunden werden muss. Der erfindungsgemäße Sauggreifer ist daher auf gleiche Art und Weise handhabbar, wie ein herkömmlicher Sauggreifer.

Beim erfindungsgemäßen Sauggreifer ist es nicht mehr erforderlich, dass zusätzlich zum Sauggreifer Unterdrucksensoren verwendet werden müssen, um festzustellen, ob am Sauggreifer ein Unterdruck anliegt oder nicht. Erfindungsgemäß sind am Sauggreifer die Mittel vorgesehen, sodass direkt am Sauggreifer festgestellt werden kann, ob ein Unterdruck anliegt oder nicht. Dies ist insbesondere bei kleinen Handhabungsgeräten von Vorteil, welche manuell bedient werden und mit welchen die Bedienperson direkten Blickkontakt hat.

Dabei ist das Mittel ein ab einem bestimmten Unterdruck im Saugraum die Farbe oder den Farbton änderndes Material, insbesondere ein Kunststoff. Wird am Sauggreifer der benötigte Unterdruck erreicht, dann erfolgt eine Farbänderung entweder an einem bestimmten Bereich des Saugkörpers oder des gesamten Saugkörpers oder der Saugkörper oder der Bereich nimmt einen anderen Farbton an. Es sind z.B. Schläuche aus Kunststoff bekannt, die ihre Farbe bei Verformung oder bei Druckbeaufschlagung ändern.

Wie bereits erwähnt, wird mit dem Mittel ein im Saugraum herrschender Unterdruck angezeigt, wobei die Anzeige insbesondere dann aktiviert wird, wenn der Unterdruck eine Unterdruckschwelle überschreitet. Das Mittel wird somit erst dann aktiviert, wenn der Unterdruck einen vorbestimmten Wert aufweist sodass sichergestellt ist, dass die zum Anheben des Gegenstands bzw. zum Festhalten des Gegenstands erforderliche Saug- oder Haltekraft auch aufgebracht werden kann.

Dabei ist das Mittel so konzipiert, dass die Unterdruckschwelle vorgebbar und/oder veränderbar ist. Abhängig von der Größe und/oder vom Gewicht des zu handhabenden Gegenstands muss der aufzuwendende Unterdruck zum Aufbringen der erforderlichen Haltekraft einen niedrigen oder einen hohen Wert aufweist.

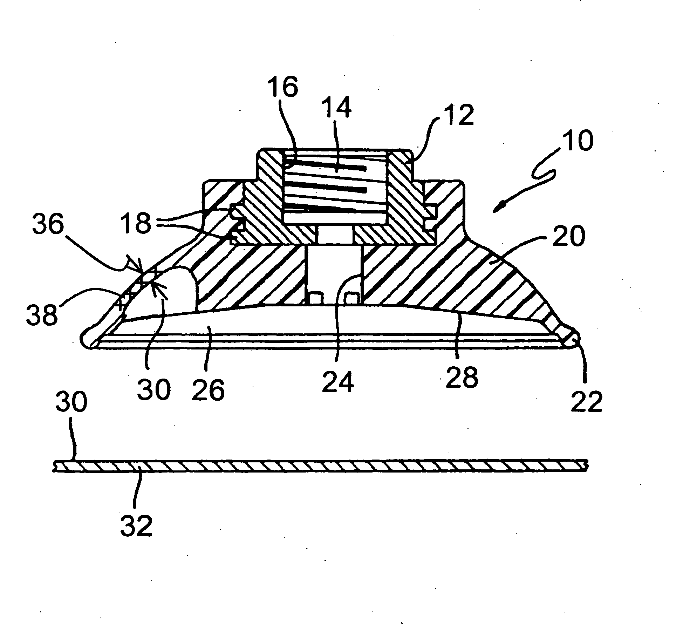

Weitere Vorteile, Merkmale und Einzelheiten der Erfindung ergeben sich aus den Unteransprüchen sowie der nachfolgenden Beschreibung, in der unter Bezugnahme auf die Zeichnung ein bevorzugtes Ausführungsbeispiel im Einzelnen beschrieben ist. Dabei können die in der Zeichnung dargestellten und in den Ansprüchen sowie in der Beschreibung erwähnten Merkmale jeweils einzeln für sich oder in beliebiger Kombination erfindungswesentlich sein. Die Zeichnung zeigt einen Querschnitt durch das Ausführungsbeispiel des erfindungsgemäßen Sauggreifers.

In der Zeichnung, die einen Querschnitt durch ein erstes Ausführungsbeispiel eines insgesamt mit 10 bezeichneten Sauggreifers zeigt, ist mit dem Bezugszeichen 12 ein Saugkörperhalter bezeichnet. Dieser weist einen Unterdruckanschluss 14 auf, der zum Beispiel mit einem Innengewinde 16 versehen ist. Die Außenseite des Saugkörperhalters 12 ist mit zwei Umfangswülsten 18 versehen, an welchen ein elastischer Saugkörper 20 sicher fixiert ist. Dieser Saugkörper 20 ist in etwa glockenförmig ausgebildet und weist einen umlaufenden unteren Rand auf, der als Dichtlippe 22 ausgebildet ist. Außerdem weist der Saugkörper 20 einen zentralen Durchbruch 24 auf, der mit dem Unterdruckanschluss 14. kommuniziert. Der Durchbruch 24 mündet in einen Saugraum 26, der von der Dichtlippe 22 umgeben ist. Ferner ist der Saugraum 26 von einer Kontaktfläche 28 begrenzt, welche bei angesaugtem Werkstück 32 an der Oberfläche 30 dieses Werkstücks 32 zu liegen kommt.

Außerdem ist erkennbar, dass der Saugkörper 20 eine Ausnehmung 34 aufweist, die bewirkt, dass der Saugkörper 20 im Bereich 38 dieser Ausnehmung 34 eine geringe Wandstärke 36 besitzt. In diesem Bereich 38 ist der aus Kunststoff bestehende Saugkörper 20 derart eingefärbt, dass sich die Farbe des Bereichs 38 verändert, wenn an den Saugraum 26 ein Unterdruck angelegt wird. Die Farbänderung kann in einem Farbumschlag, d.h. in einem Farbwechsel oder in einem Wechsel des Farbtons liegen. Es besteht auch die Möglichkeit, dass die Farbänderung erst dann erfolgt, wenn der Unterdruck einen bestimmten Wert überschreitet. Auf diese Weise ist von außen von der Bedienperson sichtbar, ob der Sauggreifer 10 lediglich auf der Oberfläche 30 des Werkstücks 32 aufliegt oder ob im Saugraum 26 auch ein Unterdruck, insbesondere ein Unterdruck mit einem bestimmten Wert herrscht.

Der Sauggreifer 10 ist an einen vorgebbaren Unterdruck im Saugraum 26 anpassbar, indem zum Beispiel der Bereich 38 mehr oder weniger Stark eingefärbt oder mit einer früher oder später umschlagenden Einfärbung versehen ist. Das bistabile Element 42 kann bei verschiedenen Ausführungsformen früher oder später umklappen, sodass der Wechsel von der Ausbeulung zur Einbeulung früher oder später erfolgt.

Mit dem erfindungsgemäßen Sauggreifer 10 kann also ohne Zuhilfenahme eines weiteren Bauteils festgestellt werden, ob im Saugraum 26 ein Unterdruck herrscht oder nicht.

## Patentansprüche

1. Sauggreifer (10) zum Ansaugen von Werkstücken (32) mit einem einen Unterdruckanschluss (14) aufweisenden Saugkörperhalter (12) und einem daran befestigten elastischen Saugkörper (20), der an seiner dem Werkstück (32) zugewandten Seite eine einen Saugraum (26) abgrenzende Dichtlippe (22) aufweist und der Saugraum (26) mit dem Unterdruckanschluss (14) strömungsverbunden ist, wobei der Sauggreifer (10) sensorfrei ist und der elastische Saugkörper (20) ein den Saugzustand anzeigendes Mittel (54) aufweist, **dadurch gekennzeichnet, dass** das Mittel (54) ein sich bei einem Unterdruck im Saugraum (26) die Farbe oder den Farbton änderndes Material, insbesondere Kunststoff ist.

2. Sauggreifer (10) nach dem Anspruch 1, **dadurch gekennzeichnet, dass** mit dem Mittel (54) ein im Saugraum (26) herrschender Unterdruck anzeigbar ist.

3. Sauggreifer nach einem der vorhergehenden Ansprüche, **dadurch gekennzeichnet, dass** mit dem Mittel (54) der Unterdruck ab einer Unterdruckschwelle anzeigbar ist.

4. Sauggreifer nach Anspruch 3, **dadurch gekennzeichnet, dass** die Unterdruckschwelle vorgebbar und/oder veränderbar ist.

## Claims

1. A suction gripper (10) for picking up workpieces (32), having an suction body holder (12) with an underpressure connector (12) and an elastic suction body (20) fastened thereon, which has on its side facing the workpiece (32), a sealing lip (22) delimiting a suction chamber (26), and wherein the suction chamber (26) is in a flow connection with the underpressure connector (12), wherein the suction gripper (10) is free of sensors, and the elastic suction body (20) has a means (54) indicating the suction state, **characterized in that** the means (54) is a material, in particular a plastic material, whose color or color tone is changed in case of an underpressure in the suction chamber (26).

2. The suction gripper (10) in accordance with claim 1, **characterized in that** an underpressure prevailing in the suction chamber (26) can be indicated by the means (54).

3. The suction gripper in accordance with one of the preceding claims, **characterized in that**, starting at an underpressure threshold, the underpressure can be indicated by the means (54).

4. The suction gripper in accordance with claim 3, **characterized in that** the underpressure threshold can be preset and/or is adjustable.

## Revendications

1. Pince aspirante (10) destinée à aspirer des pièces (32), comportant un support (12), muni d'un raccord de dépression (14), et un corps d'aspiration (20) élastique, qui est fixé audit support et qui, avec sa face orientée vers la pièce (32), comporte une lèvre d'étanchéité (22) délimitant un espace d'aspiration (26), et ledit espace d'aspiration (26) est relié en écoulement au raccord de dépression (14), ladite pince aspirante (10) ne comportant pas de capteur et le corps d'aspiration (20) élastique comportant un moyen (54) signalant l'état d'aspiration, **caractérisée en ce que** le moyen (54) est un matériau, en particulier une matière plastique, dont la couleur ou la nuance de couleur varie en présence d'une dépression dans l'espace d'aspiration (26).

2. Pince aspirante (10) selon la revendication 1, **caractérisée en ce qu'**une dépression régnant dans l'espace d'aspiration (26) peut être affichée avec le moyen (54).

3. Pince aspirante selon l'une quelconque des revendications précédentes, **caractérisée en ce que** la dépression peut être affichée avec le moyen (54) à partir d'un seuil de dépression.

4. Pince aspirante selon la revendication 3, **caractérisée en ce que** le seuil de dépression peut être prédéfini et/ou peut être modifié.
